(19) Europäisches Patentamt
European Patent Office
Office européen des brevets

(11) **EP 2 573 405 A2**

(12) **EUROPÄISCHE PATENTANMELDUNG**

(43) Veröffentlichungstag:
**27.03.2013 Patentblatt 2013/13**

(51) Int Cl.:
*F15B 11/036* (2006.01)

(21) Anmeldenummer: **12185316.2**

(22) Anmeldetag: **20.09.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **21.09.2011 AT 13632011**

(71) Anmelder: **Austrian Center of Competence in Mechatronics GmbH**
**4040 Linz (AT)**

(72) Erfinder:
• **Scheidl, Rudolf**
**3253 Erlauf (AT)**
• **Plöckinger, Andreas**
**4623 Gunskirchen (AT)**
• **Biedermann, Ingo**
**4050 Traun (AT)**

(74) Vertreter: **Jell, Friedrich**
**Bismarckstrasse 9**
**4020 Linz (AT)**

(54) **Hydraulischer Verstärker, insbesondere Linearverstärker**

(57) Es wird ein hydraulischer Verstärker, insbesondere Linearverstärker, zur Erzeugung einer gegenüber einer Sollbewegung (2) in der Kraftwirkung verstärkten Istbewegung (3) mit einem Aktorteil (4), der wenigstens zwei mechanisch gekoppelte Hydraulikaktoren (5, 6, 7, 8), insbesondere Hydraulikzylinder, zur Erzeugung der Istbewegung (3) aufweist, und mit einem mit der Soll- und Istbewegung mechanisch gekoppelten Steuerteil (14) gezeigt, der sowohl wenigstens eine zur hydraulischen Druckversorgung (pS) der Hydraulikaktoren (5, 6, 7, 8) vorgesehene Schalteinrichtung (34, 39, 100), die über wenigstens zwei voneinander getrennt schaltbare hydraulische Leitungen (35, 36, 37, 38) mit den Hydraulikaktoren (5, 6, 7, 8) verbunden ist, als auch eine mit der Schalteinrichtung (34, 39, 100) verbundene Regeleinrichtung (19, 45, 105) aufweist, wobei die Regeleinrichtung (19, 45, 105) die Schalteinrichtung (34, 39, 100) zumindest in Abhängigkeit einer Differenz zwischen Soll- und Istbewegung (2, 3) ansteuert. Um vorteilhafte mechanisch hydraulische Konstruktionsverhältnisse zu schaffen, wird vorgeschlagen, dass die Schalteinrichtung (34, 39, 100) wenigstens für zwei Hydraulikaktoren (5, 6, 7, 8) unterschiedliche Schaltschwellen (u1, u2, u3, u4 oder s1, s2, s3, s4 oder p1,u / p1,o bzw. p2,u / p2,o bzw. p3,u / p3,o bzw. p4,u / p4,o) aufweist, wobei die Regeleinrichtung (19, 45, 105) zur Ansteuerung der unterschiedlichen Schaltschwellen (u1, u2, u3, u4 oder s1, s2, s3, s4 oder p1,u / p1,o bzw. p2,u / p2,o bzw. p3,u / p3,o bzw. p4,u / p4,o) mit der Schalteinrichtung (34, 39, 100) mechanisch oder hydraulisch gekoppelt ist.

FIG.1

**Beschreibung**

Die Erfindung betrifft einen hydraulischen Verstärker, insbesondere Linearverstärker, zur Erzeugung einer gegenüber einer Sollbewegung in der Kraftwirkung verstärkten Istbewegung mit einem Aktorteil, der wenigstens zwei mechanisch gekoppelte Hydraulikaktoren, insbesondere Hydraulikzylinder, zur Erzeugung der Istbewegung aufweist, und mit einem mit der Soll- und Istbewegung mechanisch gekoppelten Steuerteil, der sowohl wenigstens eine zur hydraulischen Druckversorgung der Hydraulikaktoren vorgesehene Schalteinrichtung, die über wenigstens zwei voneinander getrennt schaltbare hydraulische Leitungen mit den Hydraulikaktoren verbunden ist, als auch eine mit der Schalteinrichtung verbundene Regeleinrichtung aufweist, wobei die Regeleinrichtung die Schalteinrichtung zumindest in Abhängigkeit einer Differenz zwischen Soll- und Istbewegung ansteuert.

Um bei einem hydraulischen Linearantrieb einen vergleichsweise hohen Wirkungsgrad mit ausreichender Auflösung kombinieren zu können, geht die WO2010/040890A1 in Richtung einer Digitalhydraulik, und zeigt eine Zylinderanordnung mit zusammenwirkenden, dual gestuften Flächen, die je von einem Schaltventil hydraulisch mit Druck versorgt werden können. Diese Schaltventile werden elektronisch angesteuert und zwar, indem ein PID-Regler über deren Schaltzustand je nach Differenz der Soll- zur Istbewegung entscheidet. Nachteilig bei diesem Verstärker hat sich sein konstruktiver Aufwand insbesondere im Bereich der Zylinderanordnung herausgestellt. Außerdem bedarf es für solch eine Konstruktion eines vergleichsweise hohen steuerungstechnischen Aufwands, insbesondere im Zusammenwirken der verschiedenen elektrischen und hydraulischen Komponenten, was hohe Standfestigkeiten, insbesondere in rauen Umgebungen, nicht gewährleisten kann.

Die Erfindung hat sich daher die Aufgabe gestellt, einen hydraulischen Verstärker der eingangs geschilderten Art auf einfache Weise derart konstruktiv zu verbessern, dass trotz hoher Auflösungseigenschaften in der Verstärkung von Sollbewegungen eine hohe Standfestigkeit gewährleistet werden kann. Außerdem soll der Verstärker kostengünstig sein und einfach gewartet werden können.

Die Erfindung löst die gestellte Aufgabe dadurch, dass die Schalteinrichtung wenigstens für zwei Hydraulikaktoren unterschiedliche Schaltschwellen aufweist, wobei die Regeleinrichtung zur Ansteuerung der unterschiedlichen Schaltschwellen mit der Schalteinrichtung mechanisch oder hydraulisch gekoppelt ist.

Weist die Schalteinrichtung wenigstens für zwei Hydraulikaktoren unterschiedliche Schaltschwellen auf, dann kann deren Ansteuerungsunterschied genützt werden, mit einer einfachen mechanischen oder hydraulischen Regelung die Auflösung des hydraulischen Verstärkers zu erhöhen, wenn die Regeleinrichtung zur Ansteuerung der unterschiedlichen Schaltschwellen mit der Schalteinrichtung mechanisch oder hydraulisch gekoppelt ist. Vergleichsweise komplizierte bzw. fehleranfällige elektronische Regelungen können so unterbleiben, was nicht nur hinsichtlich der Standfestigkeit des hydraulischen Verstärkers von Vorteil sein kann, sondern auch reaktionsschnell einer Sollbewegung folgen kann. Der erfindungsgemäße Verstärker besticht daher nicht nur durch seine Robustheit, konstruktive Einfachheit und Kompaktheit, sondern auch durch sein hohes Auflösungsvermögen, seine hohe Dynamik und seine Standfestigkeit. Im Allgemeinen wird erwähnt, dass eine in der Kraftbewegung zu verstärkende Sollbewegung entlang translatorischer und/oder rotatorischer Freiheitsgrade des hydraulischen Verstärkers erfolgen kann. Die hierfür notwendigen Hydraulikaktoren, beispielsweise Hydraulikzylinder und/oder Schwenkzylinder, sind bekannt.

Eine konstruktiv einfache mechanische Ausführung kann ermöglicht werden, wenn die Schalteinrichtung wenigstens zwei Steuerkanten aufweist, wobei die unterschiedlichen Schaltschwellen durch unterschiedliche Überdeckungen der Steuerkanten ausgebildet werden, und dass die Regeleinrichtung mit der Soll- und Istbewegung und mit den Steuerkanten derart mechanisch gekoppelt ist, dass sich die Öffnung der Steuerkanten in Abhängigkeit der Soll- und Istbewegung einstellt.

Konstruktive Einfachheit kann weiter erhöht werden, wenn die Soll- bzw. Istbewegung mit den Steuerkanten der Schalteinrichtung und die Ist- bzw. Sollbewegung mit dem jeweiligen die Steuerkanten aufnehmenden Gehäuse mechanisch gekoppelt ist. Außerdem eröffnet sich damit die Möglichkeit für alle Steuerkanten ein gemeinsames Gehäuse vorzusehen, um so höchsten Anforderungen zu einer kompakten Konstruktion genügen zu können.

Schaltschwellen können weiter ausgebildet werden, in dem die Schalteinrichtung () wenigstens zwei Ventile aufweist, die mit unterschiedlichem Spiel zur Erzeugung unterschiedlicher Schaltschwellen mit der Regeleinrichtung mechanisch verbunden sind. Um die Ventile in Abhängigkeit der Soll- und Istbewegung regeln zu können, kann vorgesehen sein, dass die Regeleinrichtung in Abhängigkeit der Soll- und Istbewegung das Spiel der jeweiligen Ventile zu deren Betätigung verändert.

Weist die Schalteinrichtung wenigstens zwei Schaltventile mit zueinander verschiedenen als Druckschwellwerte ausgebildete Schaltschwellen auf, dann kann sich damit die Möglichkeit eröffnen, alle Schaltventile mit einer gemeinsamen hydraulischen Steuerleitung zu verbinden, um so deren unterschiedliches Ansprechen zu nützen, für eine Stufung und damit für eine Auflösungserhöhung in der Verstärkung einer Sollbewegung zu einer Istbewegung zu sorgen. Zu diesem Zweck muss lediglich die mechanisch an die Soll- und Istbewegung gekoppelte Regeleinrichtung diese hydraulische Steuerleitung mit Schaltdruck hydraulisch ansteuern bzw. je nach Regelungsbedarf mit Schaltdruck versorgen. Einfache Konstruktionsverhältnisse können so bei der digitalen hydraulischen Ansteuerung der Schaltventile sichergestellt werden, was hohe Standfestigkeit des Verstärkers selbst bei rauen Umgebungsparametern ermöglichen kann. Hinzu kommt, dass die erfindungsgemäß vorgeschlagene mechanische Realisierung vergleichsweise hohen dynamischen Verstärkungsvorgaben folgen kann. Der erfindungsgemäße Verstärker besticht daher nicht nur durch seine Robustheit, konstruktive Einfachheit und Kompaktheit, sondern auch durch sein hohes Auflösungsvermögen, seine hohe Dynamik und seine Standfestigkeit.

Ein besonders gegenüber elektronischen Störungen robuster Steuerteil kann geschaffen werden, wenn die Regeleinrichtung einen hydraulischen Regler aufweist, der mechanisch mit jenen Teilen der Vorrichtung verbunden ist, die eine Soll- bzw. eine Istbewegung aufweisen und der auch die Steuerleitung hydraulisch beaufschlagt bzw. damit verbunden ist. Außerdem kann eine derartige mechanische Ausführung vergleichsweise schnell auf wechselnde Verstärkungserfordernisse reagieren und so einen hoch dynamischen Hydraulikverstärker gewährleisten. Insbesondere wenn die hydraulische Regeleinrichtung einen hydraulischen PI Regler aufweist, können sich verbesserte Regelungsverhältnisse ergeben. So kann einerseits durch den P-Anteil eine hohe Schnelligkeit des hydraulischen Reglers sichergestellt und andererseits der I-Anteil für eine kontinuierliche Stufenanpassung zu Zwecken einer geringen Differenz zwischen Soll- und Istbewegung genutzt werden.

Die konstruktive Einfachheit eines hydraulischen Verstärkers kann erhöht werden, wenn der hydraulische Regler zur Ausbildung des P-Anteils einen Zylinder aufweist, dessen beide Eingangsgrößen mit Soll- und Istbewegung aufweisenden Teilen der Vorrichtung mechanisch verbunden sind.

Die konstruktive Einfachheit kann noch weiter verbessert werden, wenn der hydraulische Regler zur Ausbildung des I-Anteils ein Wegeventil aufweist, dessen beide Eingangsgrößen mit Soll- und Istbewegung aufweisenden Teilen der Vorrichtung mechanisch verbunden sind. Als Wegeventile sind je nach zu verstärkender translatorischer und/ rotatorischer Sollbewegung Längs- und/oder Drehschieberventile als Wegeventile vorstellbar.

Die Erfindung kann noch folgende Merkmale in Anspruchsart aufweisen: Hydraulischer Verstärker nach Anspruch 14 oder 15, dadurch gekennzeichnet, dass die Zylinderflächen der Plungerzylinder dual gestuft sind. Erhöhte Stufenanzahl bzw. erhöhtes Auflösungsverhalten des Verstärkers kann ermöglicht werden, wenn die als Hydraulikzylinder ausgeführten Hydraulikaktoren des Aktorteils unterschiedlich große Zylinderflächen aufweisen. Eine duale Stufung (1:2:4 etc.) der Zylinderflächen kann sich dabei zusätzlich als vorteilhaft herausstellen.

Weisen die Schaltventile vorgespannte Federn zum Einstellen der Schaltschwellen auf, dann können sich einfache Wartungsverhältnisse des hydraulischen Verstärkers ergeben. Außerdem kann damit auch eine einfache Einstellbarkeit bzw. Bedienbarkeit des Verstärkers ermöglicht werden.

Eine sukzessive Approximation der zu bildenden Sollbewegung kann ermöglicht werden, wenn die Schaltventile für ein Hystereseverhalten je zwei unterschiedliche hydraulische Schaltschwellen aufweisen.

Für die sukzessive Approximation kann das Schaltventil einen Ventilschieber mit unterschiedlich druckbeaufschlagten Stirnflächen zur Ausbildung der beiden Schaltschwellen aufweisen.

Alternativ kann das Schaltventil ein, eine durchschlagende Charakteristik aufweisendes Federelement zur Ausbildung der beiden Schaltschwellen aufweisen.

Konstruktive Kompaktheit kann geschaffen werden, wenn der Aktorteil wenigstens zwei als Plungerzylinder ausgebildete Hydraulikaktoren aufweist, wobei der Kolben eines Plungerzylinders das Zylindergehäuse des anderen Plungerzylinders wenigstens teilweise ausbildet.

Der Aktorteil kann wenigstens zwei als Plungerzylinder ausgebildete Hydraulikaktoren aufweisen, wobei der Kolben eines Plungerzylinders das Zylindergehäuse des anderen Plungerzylinders wenigstens teilweise ausbildet, wodurch solch ein Aktorteil vergleichsweise kostengünstig hergestellt werden kann. Beispielsweise ist vorstellbar, die Kolben der aufgenommenen Plungerzylinder aus Rollen von Zylinderrollenlager zu bilden. Ein Mehrflächen-Plungerzylinder kann so auf konstruktiv einfache und kostengünstige Weise geschaffen werden.

Die Konstruktion des Aktorteils kann weiter vereinfacht werden, wenn wenigstens eine zwischen Zylinderkolben und Zylindergehäuse des die anderen Plungerzylinder aufnehmenden Plungerzylinders vorgesehene berührende Dichtung eine für alle Plungerzylinder gemeinsame hydraulische Abdichtung nach Außen ausbildet. Diese gemeinsame Dichtung kann aber nicht nur für eine Abdichtung aller Plungerzylinder sorgen, sondern eröffnet auch eine einfache Wartbarkeit des Aktorteils, was zu einer Reduktion der Betriebskosten des hydraulischen Verstärkers führen kann.

In den Figuren ist beispielsweise der Erfindungsgegenstand anhand von Ausführungsbeispielen näher dargestellt. Es zeigen

| | |
|---|---|
| Fig. 1 | eine schematische Darstellung eines hydraulischen Verstärkers, |
| Fig. 2 | eine vergrößerte Darstellung des in Fig. 1 verwendeten Reglers, |
| Fig. 3 | eine Schaltansicht zu einem Verstärker nach Fig. 1 mit der Funktion einer sukzessiven Approximation, |
| Fig. 4 und 5 | Schaltventile für den Verstärker nach Fig. 3, |
| Fig. 6 | eine Draufsicht auf eine alternative Ausführung des Aktorteils des hydraulischen Verstärkers nach Fig. 1, |
| Fig. 7 | eine Schnittansicht nach VII-VII der Fig. 6, |
| Fig. 8 | eine alternative Ausführung des Steuer- |

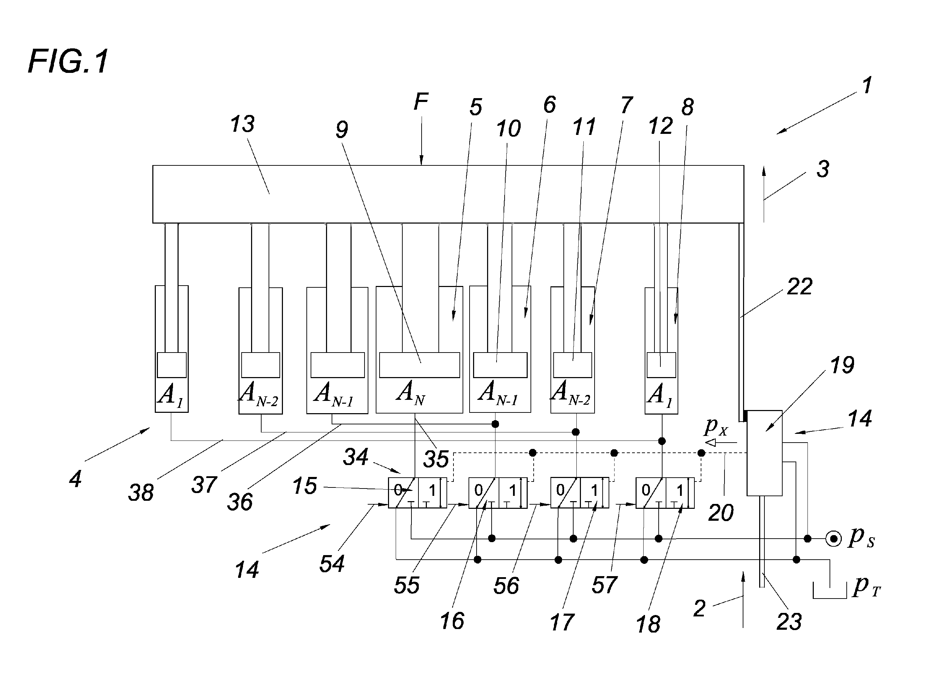

teils nach Fig. 1 und

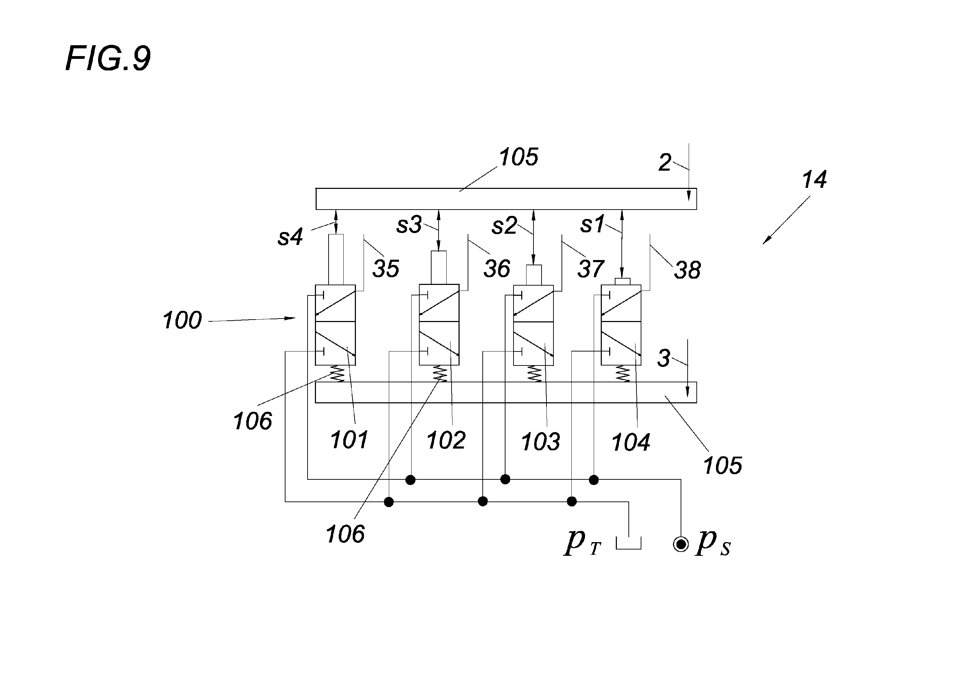

Fig. 9    eine weitere alternative Ausführung des Steuerteils nach Fig. 1.

Gemäß Fig. 1 wird ein digitaler hydraulischer Linearverstärker 1 dargestellt, der eine gegenüber einer Sollbewegung 2 verstärkte Istbewegung 3 erzeugen kann. Zu diesem Zweck ist ein Aktorteil 4 vorgesehen, das mechanisch gekoppelte Hydraulikzylinder 5, 6, 7, 8 aufweist. Dazu wirken die Kolben 9, 10, 11, 12 auf einen gemeinsamen Balken 13, der mit einer Kraft F beaufschlagt, entgegen der gewünschten Istbewegung 3 belastet ist. Um nun die gekoppelten Hydraulikzylinder 5, 6, 7, 8 entsprechend der gewünschten Sollbewegung 2 führen zu können, ist ein Steuerteil 14 vorgesehen. Das Steuerteil 14 weist für jeden anzusteuernden Hydraulikzylinder 5, 6, 7, 8 eine als Schaltventil 15, 16, 17, 18 ausgeführte Schalteinrichtung 34 auf. Die Schalteinrichtung 34 verbindet die Hydraulikzylinder 5, 6, 7, 8 entweder mit Pumpendruck pS oder Tankdruck pT, um diese mit Druck zu versorgen. Zur getrennten Ansteuerung der Hydraulikzylinder 5, 6, 7, 8 ist die Schalteinrichtung 34 über wenigstens zwei voneinander getrennt schaltbare hydraulische Leitungen 35, 36, 37, 38 mit den Hydraulikaktoren bzw. Hydraulikzylindern 5, 6, 7, 8 verbunden. Insbesondere in Fig. 1 sind auch von der Art der Hydraulikzylindern 6, 7, 8 je zwei davon an eine hydraulische Leitung 36, 37, 38 angeschlossen. Andere Konstruktionen, beispielsweise eine Entlastungsleitung mit Tankdruck unter Verwendung von Rückschlagventilen sind vorstellbar, was jedoch nicht dargestellt worden ist. Die Schaltventile 15, 16, 17, 18 sind mit einer Regeleinrichtung 19 verbunden, die die Schaltventile in Abhängigkeit einer Differenz zwischen Ist- und Sollbewegung 3, 2 ansteuert. Um konstruktive Einfachheit und dennoch vergleichsweise hohe Dynamik im Folgen von Sollbewegungen 2 ermöglichen zu können, schlägt die Erfindung vor, dass die Schaltventile 15, 16, 17, 18 zueinander verschiedene hydraulische Schaltschwellen aufweisen, die durch je eine Vorspannung, beispielsweise mit Hilfe von vorgespannten Federn 54, 55, 56, 57 an den Schaltventilen 15, 16, 17, 18, einstellbar ist. Die Schaltventile 15, 16, 17, 18 können nun mit einer hydraulische Steuerleitung hydraulisch angesteuert werden, um so unter Ausnutzung der unterschiedlichen als Druckschwellwerte ausgebildeten Schaltschwellen eine gestufte bzw. digitale Betätigung der Hydraulikzylinder 5, 6, 7, 8 auszubilden. So verbindet ein Schaltventil 15 in der Stellung 0 den Zylinder 5 mit Niederdruck pT (z.B.: Tankdruck) und in der Stellung 1 mit Hochdruck pS (z.B.: Pumpendruck). Insbesondere aber eröffnet sich mit der gestuften Reaktion der Schaltventile 15, 16, 17, 18 die Möglichkeit, die Schaltventile 15, 16, 17, 18 über eine gemeinsame Steuerleitung 20 hydraulisch von der Regeleinrichtung 19 anzusteuern. Die Regeleinrichtung 19 ist so zur Ansteuerung der unterschiedlichen Schaltschwellen mit der Schalteinrichtung 34 mechanisch oder hydraulisch gekoppelt. Eine schnelle parallele Betätigung der Schaltventile 15, 16, 17, 18 ist so geschaffen, wodurch sich die Konstruktion auch durch besonders hohe Robustheit selbst gegenüber rauen Umgebungseinflüssen auszeichnen kann. Ein standfester hydraulischer Verstärker mit hohem Wirkungsgrad ist so geschaffen.

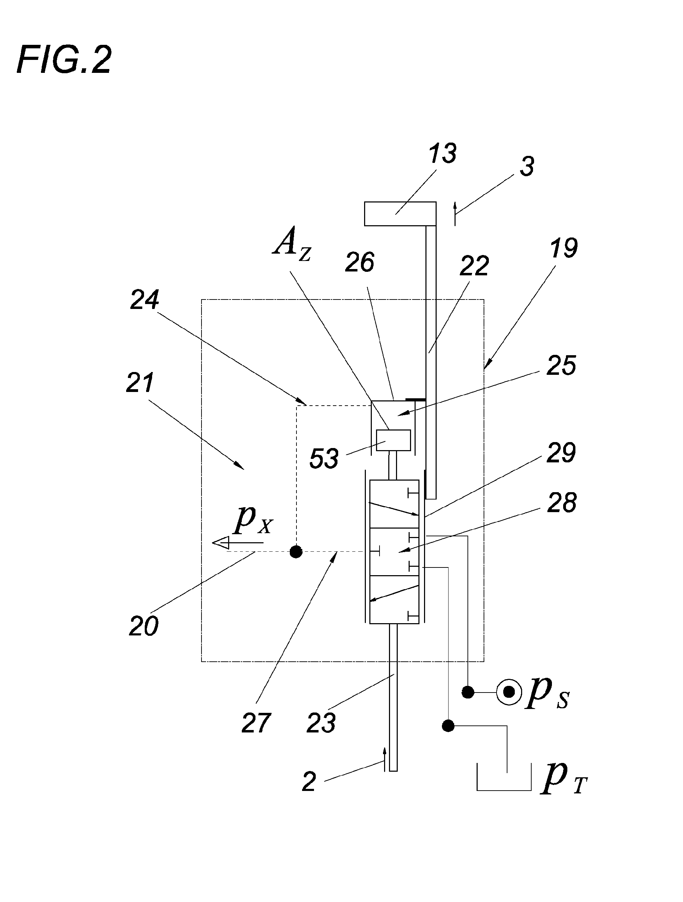

Die Regeleinrichtung 19 weist nach Fig. 2 einen hydraulischen Regler 21 auf, dem als Eingangsgröße mechanisch die Soll- und Istbewegung 2, 3 zugeführt wird. Zu diesem Zweck ist der Regler 19 einerseits über einen Stab 22 mit der Platte 13 (Istbewegung) und über einen die Sollbewegung 2 aufweisenden Stab 23 verbunden. Der hier dargestellte PI Regler 21 sorgt nun für eine rein mechanisch-hydraulische Regelung des hydraulischen Verstärkers, um damit die Steuerleitung 20 mit hydraulischem Druck zu versorgen. Andere konstruktive, insbesondere elektrische Maßnahmen können so unterbleiben, was beim Verstärker für hohe Dynamik und Standfestigkeit sorgen kann.

Der P-Regelanteil 24 des hydraulischen Reglers 21 wird durch einen Zylinder 25 ausgebildet. Zu diesem Zweck ist das Zylindergehäuse 26 mit der Istbewegung 2 beaufschlagt, sowie wird der Kolben 53 in Abhängigkeit der Sollbewegung 2 geführt. Die Verstärkung des P-Regelanteils 24 kann nun anhand der Kolbenfläche eingestellt werden.

Der I-Regelanteil 27 des hydraulischen Reglers 21 wird, wie in Fig. 2 dargestellt, mit Hilfe eines 3/3 Wegeventils 28 gebildet, dem ebenso als Eingangsgrößen die Soll- und Istbewegung 2, 3 mechanisch zugeführt werden. So ist auch hier der die Istbewegung 3 ausführende Stab 22 mit dem Gehäuse 29 mechanisch rückführend und der die Sollbewegung 2 ausführende Stab 23 mit dem als Ventilschieber ausgebildete Wegeventil 28 mechanisch verbunden. Ein dynamischer und standfester Regelkreis kann so geschaffen werden.

Wie in Fig. 1 dargestellt weisen die Hydraulikzylinder 5, 6, 7, 8 des Aktorteils 4 unterschiedlich große aktive Zylinderflächen AN bis A1 auf. Dadurch kann eine vergleichsweise große Verstärkungsbandbreite ermöglicht werden, vor allem wenn die Flächen dual gestuft sind.

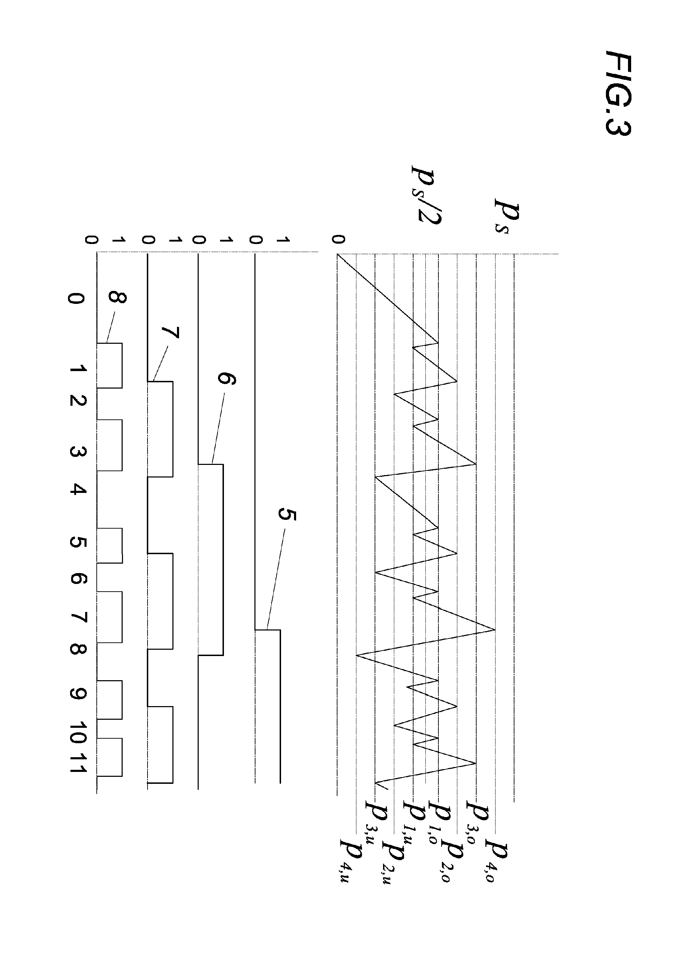

Die nach Fig. 1 dargestellten Schaltventile 15, 16, 17, 18 mit nur einer Schaltschwelle, eingestellt durch die Vorspannung der Federn 54, 55, 56, 57 können auch je zwei unterschiedliche Schaltschwellen p1,u und p1,o bzw. p2,u und p2,o bzw. p3,u und p3,o bzw. p4,u und p4,o aufweisen, deren Schaltfunktion beispielsweise der Fig. 3 entnommen werden kann. Dadurch kann jedem Schaltventil ein Hystereseverhalten zugeordnet werden, was für eine duale Ansteuerung der Hydraulikzylinder in der Art einer sukzessiven Approximation an die zu verstärkende Sollbewegung genutzt werden kann. Hohe Auflösungen und geringe konstruktive Vorrausetzungen führen so zu vorteilhaften Funktionseigenschaften des erfindungsgemäßen hydraulischen Linearverstärkers 1.

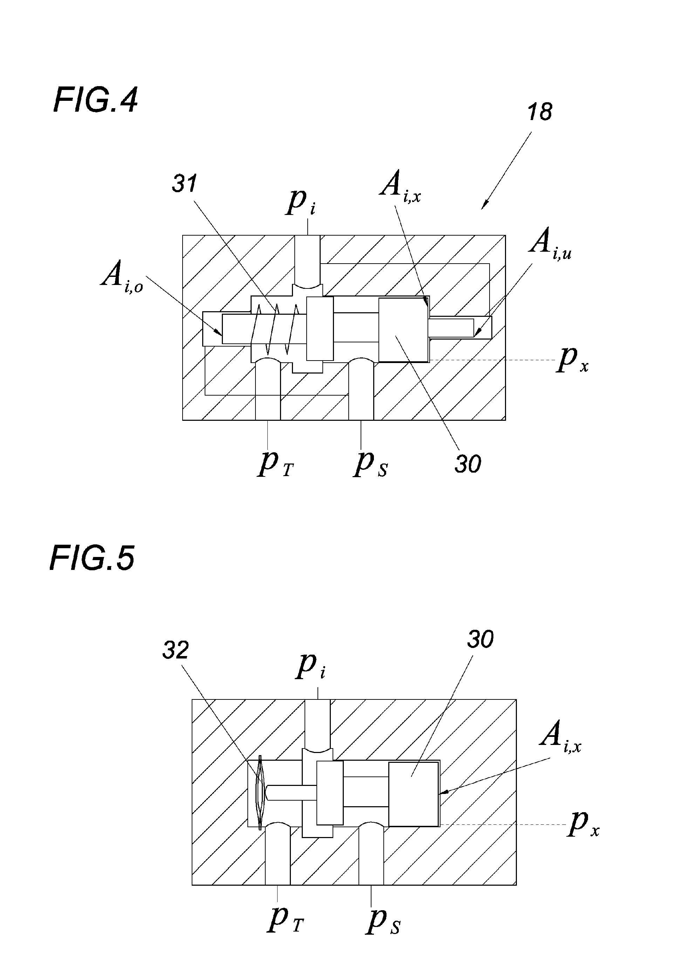

Die beiden unterschiedlichen Schaltschwellen der Schaltventile 15, 16, 17, 18 können nach Fig. 4 durch unterschiedlich druckbeaufschlagte Stirnflächen A1,x oder A1,u bzw. A1,o des Ventilschiebers 30 ermöglicht werden (A1,x bzw. A1,u bzw. A1,o ergibt sich aus den in den Figuren 4 und 5 dargestellten Ai,u, Ai,u bzw. Ai,o mit i=1..N, wobei N gleich der Anzahl Schaltventile ist).

Dadurch kann sich die nach Fig. 3 dargestellte Funktion folgendermaßen ausbilden: Ausgangspunkt sei, dass alle Schaltventile 15, 16, 17, 18 in Stellung 0 sind. Die Summe der hydraulischen Kräfte aus den kolbenseitigen Kammern aller Hydraulikzylinder 5, 6, 7, 8 ist dann Null. Es ergibt sich nämlich eine negativ (einziehend) resultierende Kraft aus dem Produkt der Summe aller stangenseitigen Flächen und dem Systemdruck. Wird nun ein positiver Sollweg bzw. eine Sollbewegung 2 vorgegeben, dann wird der Verstärker zunächst nicht folgen, weil die Kräfte nicht ausreichen. Folglich entsteht eine Ventilöffnung des Wegventils 28 und ein positiver Volumenstrom über die Hydraulikleitung. Wegen der Ölkompressibilität und der Nachgiebigkeit der Wandungen aller ölführenden Teile, wird der Steuerdruck px mit einer endlichen Steigung ansteigen bis der Wert p1,o erreicht ist. Dieser Druck entspricht im Wesentlichen folgendem Wert

$$p_{1,o} = p_S \frac{A_{1,o}}{A_{1,x}}$$

weil die Kraft der eingezeichneten Feder 31 vernachlässigbar ist und der Druck in den Zylinderkammern des Hydraulikzylinders 8 dem Tankdruck pT entspricht. Das Schaltventil 18 schaltet und hält sich selbst in der 1-Stellung, weil der zufolge Schalten annähernd auf pS angestiegene Druck am Ventilausgang auf die Fläche A1,u wirkt und eine den 1-Zustand konservierende Wirkung hat. Das bedeutet, dass der Steuerdruck auf den Wert p1,u absinkt, um das Ventil in Stellung 0 zurück zu schalten. Dieser untere Druck-Schwellwert entspricht folgender Gleichung:

$$p_{1,u} = p_S \frac{A_{1,o} - A_{1,u}}{A_{1,x}}$$

In der Tat sinkt der Steuerdruck pX kurzfristig und sehr schnell ab. Grund: der ansteigende Druck p1 (bzw. als pi in den Figuren 4 und 5 dargestellt) am Ausgang des Ventils in Kombination mit der Fläche A1,u ergibt eine positive, also selbstverstärkende Rückkopplung; das vollständige Öffnen des Schaltventils 18 geschieht nur geringfügig durch den Volumenstrom, sondern vielmehr durch diesen Rückkopplungseffekt. Weil das Volumen in der Steuerkammer mit der Stirnfläche A1,x sehr schnell vergrößert wird und bei moderatem Volumenstrom nicht schnell genug nachgefüllt werden kann, kommt es zur behaupteten, raschen Absenkung des Steuerdrucks pX.

Bleibt weiterhin Qx > 0, so wird der Druck wieder weiter steigen, bis der obere Schwellwert p2,o des Schaltventils 17 erreicht ist. Dann schaltet das Ventil 17 in völlig analoger Weise zum Schaltventil 18 mit einer analogen Wirkung auf den Druck pX. Der untere Schwellwert p2,u des Schaltventils 17 liegt tiefer als p1,u. Daher schaltet das Schaltventil 18 auch wieder auf Stellung 0. Damit das in robuster Weise geschehen kann, muss die Fläche A2,x größer als A1,x sein. Dann nämlich reicht das von A2,x angesaugte Ölvolumen aus, das Verdrängungsvolumen von A1,x bereit zu stellen.

Das Schalten der weiteren Schaltventile 16 und 15 geschieht in analoger Weise, wodurch sich die gewünschte sukzessive Approximation einstellen kann.

Alternativ zum nach Fig. 4 dargestellten Schaltventil kann das nach Fig. 5 dargestellte Schaltventil ein Federelement 32 mit durchschlagender Charakteristik aufweisen, um damit die beiden Druckschwellwerte p1,u und p1,o bzw. p2,u und p2,o bzw. p3,u und p3,o bzw. p4,u und p4,o auszubilden.

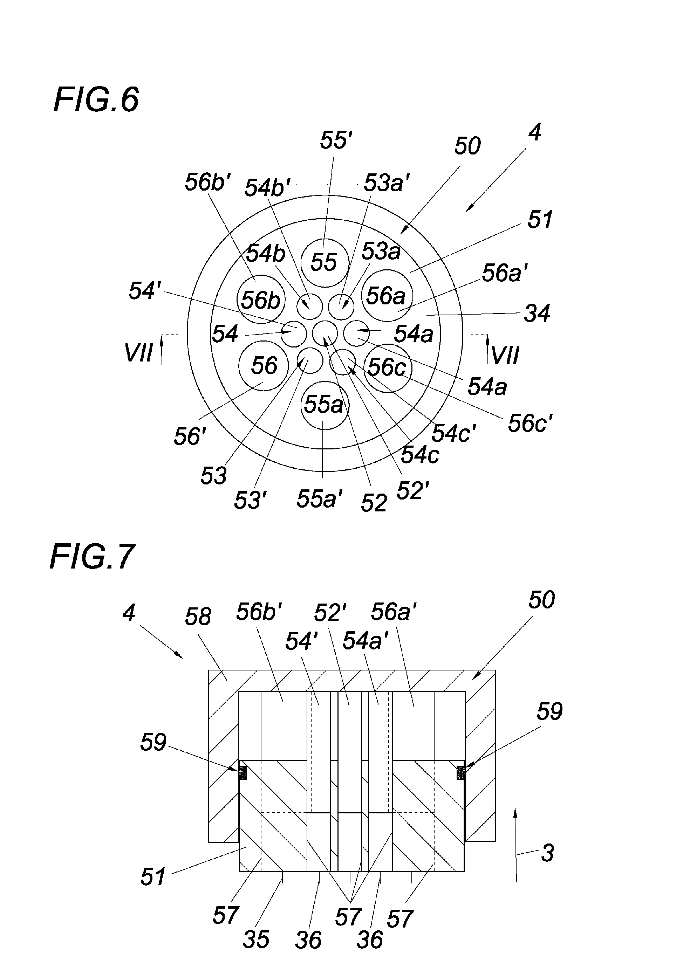

Nach den Figuren 6 und 7 wird als Aktorteil 4 ein Plungerzylinder 50 gezeigt, der bzw. dessen Zylinderkolben 51 weitere Plungerzylinder 52, 53, 53a, 54, 54a, 54b, 54c, 55, 55a, 56, 56a, 56b und 56c aufnimmt bzw. diese teilweise lagert. Zu diesem Zweck sind im Zylinderkolben 51 des größeren Plungerzylinders 50 Bohrungen 57 vorgesehen, die wenigstens einen Teil der Zylindergehäuse der eingesetzten Plungerzylinder 52, 53, 53a, 54, 54a, 54b, 54c, 55, 55a, 56, 56a, 56b und 56c ausbilden und deren Zylinderkolben 52', 53', 53a', 54', 54a', 54b', 54c', 55', 55a', 56', 56a', 56b' und 56c' führen. Alle Plungerzylinder 50, 52, 53, 53a, 54, 54a, 54b, 54c, 55, 55a, 56, 56a, 56b und 56c sind gleichwie in Fig. 1 dargestellt hinsichtlich ihrer Arbeitsbewegung zur Erzeugung einer gemeinsamen Istbewegung 3 fest miteinander verbunden, in dem diese gegen das Zylindergehäuse 58 des großen Plungerzylinders 50 arbeiten. Ein besonders kompakter Aktorteil 4 kann so geschaffen werden, der trotz seiner kompakten konstruktiven Abmessungen eine vergleichsweise hohe Auflösung und Dynamik bei der Erzeugung seiner Istbewegung 3 sicherstellen kann. Außerdem können die Zylinderkolben 52', 53', 53a', 54', 54a', 54b', 54c', 55', 55a', 56', 56a', 56b' und 56c' konstruktiv einfach und auch kostengünstig aus Rollen von Zylinderrollenlagern gebildet werden.

Diese vorteilhafte konstruktive Verschachtelung von Plungerzylindern 50, 52, 53, 53a, 54, 54a, 54b, 54c, 55, 55a, 56, 56a, 56b und 56c bietet weiter Vorteile hinsichtlich des konstruktiven Aufbaus, indem lediglich eine berührende Dichtung 59 vorgesehen werden muss, um die Vielzahl an Plungerzylindern 50, 52, 53, 53a, 54, 54a, 54b, 54c, 55, 55a, 56, 56a, 56b und 56c hydraulisch nach Außen abzudichten, um Leckage zu vermeiden. Diese gemeinsam genutzte Dichtung 59 ist zu diesem Zweck zwischen dem Zylindergehäuse 58 und dem Zylinderkolben 51 des Plungerzylinders 50 vorgesehen.

Neben einer konstruktiven Einfachheit eröffnet sich damit auch die Möglichkeit einer einfachen Wartbarkeit des Aktorteils 4. Um die anderen Plungerzylinder 52, 53, 53a, 54, 54a, 54b, 54c, 55, 55a, 56, 56a, 56b und 56c, können beispielsweise zwischen den aufgenommenen Zylinderkolben 52', 53', 53a', 54', 54a', 54b', 54c', 55', 55a', 56', 56a', 56b' und 56c' und deren diesbezüglichen Bohrungen 57 Spielpassung vorgesehen werden.

Die aktiven Zylinderflächen der Plungerzylinder 50, 52, 53, 53a, 54, 54a, 54b, 54c, 55, 55a, 56, 56a, 56b und 56c sind dual gestuft. So ist die aktive Fläche des Plungerzylinders 50 doppelt so groß wie die aktive Fläche der Plungerzylinder 56, 56a, 56b und 56c. Diese Fortsetzung der dualen Abstufung erschließt sich auch den Plungerzylindern 55 und 55a, den Plungerzylindern 54, 54a, 54b und 54c, den Plungerzylindern 53 und 53a sowie dem Plungerzylinder 52.

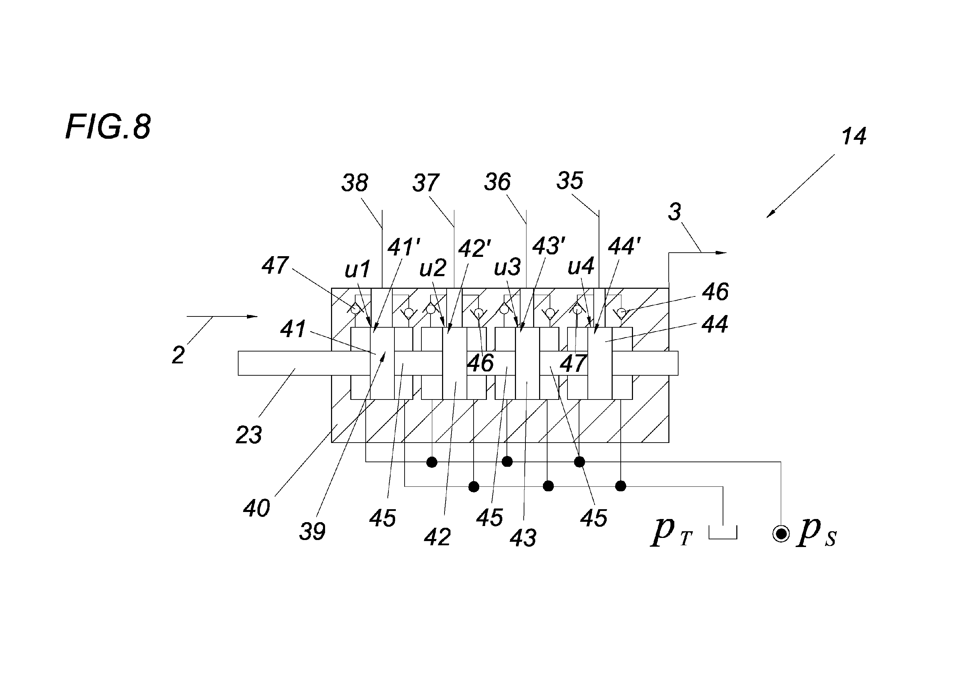

Nach Fig. 8 wird eine alternative Ausbildung des nach Fig. 1 dargestellten Steuerteils 14 gezeigt, deren Schalteinrichtung 39 wenigstens zwei Steuerkanten 41' 42', 43', 44' aufweist. Die unterschiedlichen Schaltschwellen werden durch unterschiedliche Überdeckungen u1, u2, u3, u4 der Steuerkanten 41', 42', 43', 44' ausgebildet. Zu diesem Zweck nimmt ein Gehäuse 40 mehrere Steuerschieber 41, 42, 43, 44 mit diesen Steuerkanten 41', 42', 43', 44' auf. Aufgrund unterschiedlicher Überdeckungen u1, u2, u3, u4 ermöglichen diese Steuerschieber 41, 42, 43, 44 auch unterschiedliche Schaltschwellen. Durch eine Betätigung des die Sollbewegung 2 aufweisenden Stabs 23 verbinden nun die Steuerschieber 41, 42, 43, 44 sukzessiv mit den Hydraulikleitungen 35, 36, 37, 38, um die daran angeschlossenen Hydraulikaktoren 5, 6, 7 und 8 mit Hydraulikdruck (pT oder pS) versorgen zu können. Die Regeleinrichtung 45 ist nun mit der Soll- und Istbewegung 2, 3 und mit den Steuerkanten 41', 42', 43', 44' derart mechanisch gekoppelt, dass sich die Öffnung der Steuerkanten 41', 42', 43', 44' in Abhängigkeit der Soll- und Istbewegung 2, 3 einstellt. Zu diesem Zweck wird die Sollbewegung 2 mit den Steuerkanten 41', 42', 43', 44' der Schalteinrichtung 39 und die Istbewegung 3 mit dem Gehäuse 40 mechanisch gekoppelt. Ein besonders kompakter und robuster hydraulischer Verstärker 1 kann so geschaffen werden. Vorzugsweise kann mit Hilfe von Rückschlagventilen 46 und 47, wobei davon das Rückschlagventil 46 von der jeweiligen Hydraulikleitungen 35, 36, 37, 38 zum Tankdruck pT bzw. zur Tankleitung und das Rückschlagventil 47 von der jeweiligen Hydraulikleitungen 35, 36, 37, 38 zum Pumpendruck pS bzw. zur hydraulischen Druckversorgung hin verbinden, bei geschlossener Steuerkante 41', 42', 43', 44' einerseits Hydraulikflüssigkeit vom Tank nachgesaugt und andererseits auch Drücke über dem Systemdruck in die Druckversorgung zurückgespeist werden.

Nach Fig. 9 wird eine weitere alternative Ausbildung des Steuerteils 14 gezeigt, deren Schalteinrichtung 100 vier Ventile 101, 102, 103, 104 aufweist. Die Ventile 101, 102, 103 und 104 sind mit unterschiedlichem Spiel s1, s2, s3, s4 zur Erzeugung unterschiedlicher Schaltschwellen mit der Regeleinrichtung 105 mechanisch verbunden. Diese Regeleinrichtung 105 verändert nun in Abhängigkeit der Soll- und Istbewegung 2, 3 das Spiel s1, s2, s3 bzw. s4 der jeweiligen Ventile 101, 102, 103 bzw. 104, um diese Ventile 101, 102, 103 bzw. 104 je nach Bedarf zu betätigen. Dadurch kann eine Verbindung der Hydraulikleitungen 35, 36, 37, 38 und damit auch die daran angeschlossenen Hydraulikaktoren 5, 6, 7 und 8 mit Hydraulikdruck (pT oder pS) geschaffen werden. Ein besonders robuster und konstruktiv einfacher Verstärker mit hoher Dynamik und Standfestigkeit kann so geschaffen werden. Vorstellbar ist, im Spiel s1, s2, s3, s4 ebenso Federn einzusetzen, wie diese Federn 106 zwischen dem die Istbewegung 3 aufnehmenden und bewegten Teil der Regeleinrichtung 105 und den Ventilen 101, 102, 103 und 104 vorgesehen sind.

**Patentansprüche**

1.  Hydraulischer Verstärker, insbesondere Linearverstärker, zur Erzeugung einer gegenüber einer Sollbewegung (2) in der Kraftwirkung verstärkten Istbewegung (3) mit einem Aktorteil (4), der wenigstens zwei mechanisch gekoppelte Hydraulikaktoren (5, 6, 7, 8), insbesondere Hydraulikzylinder, zur Erzeugung der Istbewegung (3) aufweist, und mit einem mit der Soll- und Istbewegung mechanisch gekoppelten Steuerteil (14), der sowohl wenigstens eine zur hydraulischen Druckversorgung (pS) der Hydraulikaktoren (5, 6, 7, 8) vorgesehene Schalteinrichtung (34, 39, 100), die über wenigstens zwei voneinander getrennt schaltbare hydraulische Leitungen (35, 36, 37, 38) mit den Hydraulikaktoren (5, 6, 7, 8) verbunden ist, als auch eine mit der Schalteinrichtung (34, 39, 100) verbundene Regeleinrichtung (19, 45, 105) aufweist, wobei die Regeleinrichtung (19, 45, 105) die Schalteinrichtung (34, 39, 100) zumindest in Abhängigkeit einer Differenz zwischen Soll- und Istbewegung (2, 3) ansteuert, **dadurch gekennzeichnet, dass** die Schalteinrichtung (34, 39, 100) wenigstens für zwei Hydraulikaktoren (5, 6, 7, 8) unterschiedliche Schaltschwellen (u1, u2, u3, u4 oder s1, s2, s3, s4 oder p1,u / p1,o bzw. p2,u / p2,o bzw. p3,u / p3,o bzw. p4,u / p4,o) aufweist, wobei die Regeleinrichtung (19, 45, 105) zur Ansteuerung der unterschiedlichen Schaltschwellen (u1, u2, u3, u4 oder s1, s2, s3, s4 oder p1,u / p1,o bzw. p2,u / p2,o bzw. p3,u / p3,o bzw. p4,u / p4,o) mit der Schalteinrichtung (34, 39, 100) mechanisch oder hydraulisch gekoppelt ist.

2.  Hydraulischer Verstärker nach Anspruch 1, **dadurch gekennzeichnet, dass** die Schalteinrichtung (39) wenigstens zwei Steuerkanten (41', 42', 43', 44') aufweist, wobei die unterschiedlichen Schaltschwellen durch unterschiedliche Überdeckungen (u1, u2, u3, u4) der Steuerkanten (41', 42', 43', 44') ausgebildet werden, und dass die Regeleinrichtung (45) mit der Soll- und Istbewegung (2, 3) und mit den Steuerkanten (41', 42', 43', 44') derart mechanisch gekoppelt ist, dass sich die Öffnung der Steuerkanten (41', 42', 43', 44') in Abhängigkeit der Soll- und Istbewegung (2, 3) einstellt.

3. Hydraulischer Verstärker nach Anspruch 2, **dadurch gekennzeichnet, dass** die Soll- bzw. Istbewegung (2, 3) mit den Steuerkanten (41', 42', 43', 44') der Schalteinrichtung (39) und die Ist- bzw. Sollbewegung (3, 2) mit dem jeweiligen die Steuerkanten (41', 42', 43', 44') aufnehmenden Gehäuse (40) mechanisch gekoppelt ist.

4. Hydraulischer Verstärker nach Anspruch 1, **dadurch gekennzeichnet, dass** die Schalteinrichtung (100) wenigstens zwei Ventile (101, 102, 103, 104) aufweist, die mit unterschiedlichem Spiel (s1, s2, s3, s4) zur Erzeugung unterschiedlicher Schaltschwellen mit der Regeleinrichtung (105) mechanisch verbunden sind, wobei die Regeleinrichtung (105) in Abhängigkeit der Soll- und Istbewegung (2, 3) das Spiel (s1, s2, s3, s4) der jeweiligen Ventile (101, 102, 103, 104) zu deren Betätigung verändert.

5. Hydraulischer Verstärker nach Anspruch 1, **dadurch gekennzeichnet, dass** die Schalteinrichtung (34) wenigstens zwei Schaltventile (15, 16, 17, 18) mit zueinander verschiedenen als Druckschwellwerte (p1,u / p1,o bzw. p2,u / p2,o bzw. p3,u / p3,o bzw. p4,u / p4,o) ausgebildete Schaltschwellen aufweist und dass die mechanisch an die Soll- und Istbewegung (2, 3) gekoppelte Regeleinrichtung (19) mit den Schaltventilen (15, 16, 17, 18) zu deren hydraulischen Ansteuerung über eine diesen Schaltventilen (15, 16, 17, 18) gemeinsame hydraulische Steuerleitung (20) verbunden ist.

6. Hydraulischer Verstärker nach Anspruch 5, **dadurch gekennzeichnet, dass** die Regeleinrichtung (19) einen hydraulischen Regler (21), insbesondere einen hydraulischen PI Regler, aufweist, der mit den eine Soll- und Istbewegung (2, 3) aufweisenden Teilen der Vorrichtung (1) mechanisch und mit der Steuerleitung (20) hydraulisch verbunden ist.

7. Hydraulischer Verstärker nach Anspruch 5, **dadurch gekennzeichnet, dass** der hydraulische Regler (21) zur Ausbildung des P-Anteils einen Zylinder (25) aufweist, dessen beide Eingangsgrößen mit Soll- und Istbewegung (2, 3) aufweisenden Teilen der Vorrichtung (1) mechanisch verbunden sind.

8. Hydraulischer Verstärker nach Anspruch 6 oder 7, **dadurch gekennzeichnet, dass** der hydraulische Regler (21) zur Ausbildung des I-Anteils ein Wegeventil (28) aufweist, dessen beide Eingangsgrößen mit Soll- und Istbewegung (2, 3) aufweisenden Teilen der Vorrichtung (1) mechanisch verbunden sind.

9. Hydraulischer Verstärker nach einem der Ansprüche 5 bis 8, **dadurch gekennzeichnet, dass** die als Hydraulikzylinder ausgeführten Hydraulikaktoren (5, 6, 7, 8) des Aktorteils (4) unterschiedlich große Zylinderflächen (A1, .., An-1, An-2, An) aufweisen, insbesondere dual gestuft sind.

10. Hydraulischer Verstärker nach einem der Ansprüche 5 bis 9, **dadurch gekennzeichnet, dass** die Schaltventile (15, 16, 17, 18) vorgespannte Federn (54, 55, 56, 57) zum Einstellen der Schaltschwellen (p1,u / p1,o bzw. p2,u / p2,o bzw. p3,u /p3,o bzw. p4,u / p4,o) aufweisen.

11. Hydraulischer Verstärker nach einem der Ansprüche 5 bis 10, **dadurch gekennzeichnet, dass** die Schaltventile (15, 16, 17, 18) für ein Hystereseverhalten je zwei unterschiedliche hydraulische Schaltschwellen (p1,u und p1,o bzw. p2,u und p2,o bzw. p3,u und p3,o bzw. p4,u und p4,o) aufweisen.

12. Hydraulischer Verstärker nach Anspruch 11, **dadurch gekennzeichnet, dass** das Schaltventil (15, 16, 17, 18) einen Ventilschieber (30) mit unterschiedlich druckbeaufschlagten Stirnflächen (Ai,x , Ai,u , Ai,o) zur Ausbildung der beiden Schaltschwellen (p1,u und p1,o bzw. p2,u und p2,o bzw. p3,u und p3,o bzw. p4,u und p4,o) aufweist.

13. Hydraulischer Verstärker nach Anspruch 11, **dadurch gekennzeichnet, dass** das Schaltventil (15, 16, 17, 18) ein, eine durchschlagende Charakteristik aufweisendes Federelement (32) zur Ausbildung der beiden Schaltschwellen (p1,u und p1,o bzw. p2,u und p2,o bzw. p3,u und p3,o bzw. p4,u und p4,o) aufweist.

14. Hydraulischer Verstärker nach einem der Ansprüche 1 bis 13, **dadurch gekennzeichnet, dass** der Aktorteil (4) wenigstens zwei als Plungerzylinder (50, 52, 53, 53a, 54, 54a, 54b, 54c, 55, 55a, 56, 56a, 56b, 56c) ausgebildete Hydraulikaktoren aufweist, wobei der Zylinderkolben (51) eines Plungerzylinders (50) das Zylindergehäuse des anderen Plungerzylinders (52, 53, 53a, 54, 54a, 54b, 54c, 55, 55a, 56, 56a, 56b und 56c) wenigstens teilweise ausbildet.

15. Hydraulischer Verstärker nach Anspruch 14, **dadurch gekennzeichnet, dass** wenigstens eine zwischen Zylinderkolben (51) und Zylindergehäuse (58) des die anderen Plungerzylinder (52, 53, 53a, 54, 54a, 54b, 54c, 55, 55a, 56, 56a, 56b und 56c) aufnehmenden Plungerzylinders (50) vorgesehene berührende Dichtung (59) eine für alle Plungerzylinder (50, 52, 53, 53a, 54, 54a, 54b, 54c, 55, 55a, 56, 56a, 56b und 56c) gemeinsame hydraulische Abdichtung nach Außen ausbildet.

# FIG.1

## FIG.2

FIG.3

*FIG.4*

$18$

$31$ $p_i$ $A_{i,x}$ $A_{i,u}$

$A_{i,o}$

$p_x$

$p_T$ $p_S$ $30$

*FIG.5*

$32$ $p_i$ $30$

$A_{i,x}$

$p_x$

$p_T$ $p_S$

FIG.6

FIG.7

EP 2 573 405 A2

*FIG.8*

FIG.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010040890 A1